# EUROPÄISCHE PATENTANMELDUNG

(11) **EP 0 855 479 A2**
(43) Veröffentlichungstag der Anmeldung: **29.07.1998**
(21) Anmeldenummer: 98101054.9
(22) Anmeldetag: 22.01.1998
(51) Int. Cl.: E04D 12/00

(54) **Diffusionsoffene Dachunterspannbahn und Verfahren zur Herstellung derselben**

(30) Priorität: 22.01.1997 DE 29700987 U
(71) Anmelder: Wirz, Peter, 53721 Siegburg (DE)
(72) Erfinder: Wirz, Peter, 53721 Siegburg (DE)
(74) Vertreter: Müller-Gerbes, Margot, Dipl.-Ing.

(57) **Zusammenfassung**

Die Erfindung betrifft eine Diffusionsoffene und wasserdichte Dachunterspannbahn aus einem mindestens dreilagigen Verbund, enthaltend zwei äußere Vliesschichten (1,3) auf Basis von thermoplastischen Kunststoffen und eine innere wasserdampfdurchlässige und wasserundurchlässige Schicht (2) aus einer porösen atmungsaktiven Folie auf Basis thermoplastischer Kunststoffe, wobei die Folie inerte anorganische Feststoffteilchen mit einem mittleren Durchmesser kleiner 10 µm als Füllstoff in einer Menge von mindestens 10 Volumen-%, bezogen auf das Gesamtvolumen, an thermoplastischem Kunststoff und Füllstoff enthält, wobei zwischen den äußeren Vliesschichten (1,3) und der Folienschicht (2) eine Faserschicht (4,5) aus Microfasern aus Ethylen-Vinylacetat-Copolymer von 2 bis 7 g/m² Flächengewicht vorgesehen ist und der Verbund durch Kaschieren hergestellt ist sowie ein Verfahren zur Herstellung derselben.

## Beschreibung

Die Erfindung betrifft eine diffusionsoffene und wasserdichte Dachunterspannbahn aus einem mindestens dreilagigen Verbund, enthaltend zwei äußere Vliesschichten auf Basis von thermoplastischen Kunststoffen und eine innere wasserdampfdurchlässige und wasserundurchlässige Schicht aus einer porösen atmungsaktiven Folie auf Basis thermoplastischer Kunststoffe, wobei die Folie inerte anorganische Feststoffteilchen mit einem mittleren Durchmesser kleiner 10 µm als Füllstoff in einer Menge von mindestens 10 Volumen-%, bezogen auf das Gesamtvolumen an thermoplastischem Kunststoff und Füllstoff enthält.

Dachunterspannbahnen sollen gegenüber Wasser undurchlässig sein, andererseits jedoch diffusionsoffen und eine gute Wasserdampfdurchlässigkeit aufweisen. Aus der EP 0169 308 B1 ist eine Dachunterspannbahn bekannt, die aus einer Polyurethanfolie besteht, die einseitig auf der der Dachinnenseite zugewandten Seite mit einer Vliesschicht verbunden ist, beispielsweise einem Polyethylenvlies, wobei eine stoffschlüssige Verbindung ohne Verbindungshilfsmittel durch direkte Aufextrusion der Polyurethanfolie auf die Vliesschicht erfolgt. Es hat sich jedoch herausgestellt, daß die Wasserdampfdurchlässigkeit dieser Unterspannbahn aus einer auf eine Vliesschicht aufextrudierten Polyurethanfolie den Anforderungen in der Praxis beim Einbau in wärmegedämmte Dächer nicht genügt.

Es sind daher bereits Dachunterspannbahnen mit einer inneren Folienschicht auf Basis eines Polyether-Block-Amids (PEBA) mit beidseitiger Abdeckung mit einer Abdeckvliesstofflage beispielsweise aus der DE 295 11 308 U1 bekannt geworden, die durch Laminierung miteinander verbunden sind. Bei dieser bekannten Verbund-Dachunterspannbahn ist die innere wasserdampfdurchlässige und wasserdichte Folie gegenüber mechanischer Verletzung geschützt, jedoch hat sich durch die Wasseraufnahmefähigkeit der inneren Folienschicht auf Basis Polyether-Block-Amid ein Ablöseeffekt der Vliesstoffschichten von der inneren Folienschicht eingestellt. Ebenso hat sich auch die aus der DE 34 25 795 C2 bekannte Dachunterspannbahn aus einem Polyester-Block-Amid des hydrophilen Typs, die als Feuchtigkeitsspeicher ausgebildet ist, nicht bewährt, da sie trotz einer hohen Wasserdampfdurchlässigkeit ohne Vliesschichtabdeckung bei punktweiser mechanischer Belastung leicht verletzt und wasserundicht wird.

In der EP 0708 212 A1 wird eine Dachunterspannbahn mit wasserdampfdurchlässigen und wasserundurchlässigen Eigenschaften vorgeschlagen, die einen dreischichtigen Aufbau aufweist, wobei zwischen zwei wasserdurchlässigen und wasserdampfdurchlässigen Vliesschichten eine zwischen den Vliesschichten eingebettete und mit diesen verbundene filmartige wasserdampfdurchlässige, wasserundurchlässige Sperrschicht vorgesehen ist, die aus einem wasseraufnehmenden Kunststoffmaterial besteht, wie einem hydrophilen thermoplastischen Polyurethan und/oder einem hydrophilen Polyether-Polyamid-Block-Copolymer und/oder Polyetherester, und reversibel quellbar ist.

Zur Vermeidung einer Ablösung der drei Schichten der Dachunterspannbahn durch das Quellen der Sperrschicht wird eine stoffschlüssige Verbindung vorgeschlagen, insbesondere ein Aufextrudieren der Sperrschicht auf eine der anliegenden Vliesschichten oder ein Herstellen des Verbundes durch Verkleben der Sperrschicht mit mindestens einer der Vliesschichten.

Bei extremen Belastungen in bezug auf Temperaturschwankungen oder hohe Feuchtigkeit und langanhaltende Wasseraufnahme durch die Sperrschicht hat sich jedoch gezeigt, daß die Dachunterspannbahn gemäß EP 0708 212 infolge der hydrophilen Ausbildung der Sperrschicht und der Wasseraufnahmefähigkeit ein Delaminieren des Verbundes nicht immer vermeidbar ist.

Aus der EP 0570 215 A2 ist ein als Dachunterspannbahn einsetzbares Laminat bekannt, umfassend einen flüssigkeitsundurchlässigen und wasserdampfdurchlässigen Film, der ein- oder beidseitig mit einer textilen Schicht, wie Vliesschicht, abgedeckt ist und wobei der Verbund der Schichten durch punktuelle Verbindung mittels Kleber oder durch punktuelles Thermobonding erfolgt. Als innerer Film kann eine mikroporöse Membran aus Polyolefinen vorgesehen werden. Problematisch bei der Herstellung eines Verbundes einer Dachunterspannbahn gemäß EP 05 70 215 A2 ist die Herstellung eines über lange Jahre hin festen und wasserdichten Verbundes, bei dem die Wasserdampfdurchlässigkeit der inneren Folienschicht nicht durch die Befestigungsbereiche infolge der Klebemittel oder der thermischen Verbindung in einem zu hohem Maße beeinträchtigt wird. Es hat sich herausgestellt, daß das punktuelle Verbinden der drei Schichten zu dem die Dachunterspannbahn bildenden Verbund den mechanischen Anforderungen im Einsatz der Dachunterspannbahn nicht immer genügt, da die Festigkeit des Verbundes auf Grund der nur partiellen Verbindungsbereiche nicht immer gewährleistet ist.

Der Erfindung liegt die Aufgabe zugrunde, den bekannten Verbund einer dreischichtigen diffusionsoffenen und wasserdichten Dachunterspannbahn bezüglich der Festigkeit unter gleichzeitiger Beibehaltung einer hohen Wasserdampfdurchlässigkeit zu verbessern.

Diese Aufgabe wird bei einer Dachunterspannbahn der gattungsgemäßen Art durch erfindungsgemäße Weiterbildung in der Weise gelöst, daß zwischen jeder der äußeren Vliesschichten und der Folienschicht eine Faserschicht aus Microfasern aus Ethylen-Vinylacetat-Copolymer von 2 bis 7 g/m² Flächengewicht vorgesehen ist und der Verbund durch Kaschieren hergestellt ist.

Die erfindungsgemäße Dachunterspannbahn ermöglicht durch ihren mindestens fünfschichtigen Aufbau die Herstellung eines dauerhaften haftfesten Verbundes durch Kaschieren, d.h. durch insbesondere gleichzeitige Anwendung von Wärme und Druck, wobei durch die Auswahl der die Haftfestigkeit liefernden Mikrofaserschicht und deren Ausbildung sowohl vom Material als auch von der Menge her die Wasserdampfdurchlässigkeit der inneren Folienschicht ebenso wie die Wasserdampfdurchlässigkeit der Vliesschichten, die naturgemäß gegeben ist, nicht beeinträchtigt wird bzw. nur unwesentlich beeinträchtigt wird. Gleichzeitig wird eine hohe Festigkeit des Verbundes erreicht, ein Delaminieren der miteinander verbundenen Schichten im Gebrauch ist vermieden. Durch den Einsatz einer atmungsaktiven porösen Folie ist es möglich, quellbare und wasseraufnehmende thermoplastische Kunststoffe für den Einsatz als innere Folienschicht zu vermeiden, vielmehr können hydrophobe oder hydrophobierte Materialien für die Herstellung einer porösen atmungsaktiven Folie als innerer Folienschicht eingesetzt werden.

Die innere mikroporöse Folienschicht weist eine Mikroporösität auf, die die Dampfdurchlässigkeit ermöglicht, jedoch die Wasserdichtigkeit gewährleistet, da die Kapillaren so klein sind, daß ein Durchdringen von Wasser abgewehrt wird.

Als thermoplastischer Kunststoff für die Folie der inneren Schicht sind insbesondere Polyolefine oder Polyester vorgesehen. Solche atmungsaktiven mikroporösen Folien sind bekannt und beispielsweise in der US 4472 328 beschrieben.

Eine als innere Folienschicht geeignete atmungsaktive Folie sollte inerte anorganische Feststoffteilchen mit einem mittleren Durchmesser kleiner 10 µm als Füllstoff in einer Menge von mindestens 10 Volumen-%, vorzugsweise 15-35 Volumen-% bezogen auf das Gesamtvolumen an thermoplastischen Kunststoff und Füllstoff enthalten, wobei die innere Folienschicht eine Dicke von vorzugsweise 20 bis 40 µm aufweisen sollte. Als anorganische Feststoffteilchen sollten solche mit hydrophober Oberfläche eingesetzt werden bzw. hydrophobierte Feststoffteilchen. Als Feststoffteilchen ist Calciumcarbonat bevorzugt, insbesondere mit einer hydrophoben Oberflächenausrüstung, beispielsweise mittels Calciumstearat.

Eine weitere Verbesserung der Wasserdichtigkeit kann auch durch Hydrophobierung der inneren Folienschicht erreicht werden, wobei diese beispielsweise mit Hydrophiermitteln auf Basis von Fluorkohlenstoffen, wie Block-Copolymere eines Perfluoralkylacrylats oder Fluorkohlenstoffen, die Trifluormethylsilylgruppen an Stelle der Perfluoralkylgruppen enthalten, hydrophob ausgerüstet sein können. Diese Hydrophobiermittel können oberflächlich auf die innere Folienschicht aufgebracht oder in diese eingearbeitet sein.

Vorteilhafte Ausgestaltungen der erfindungsgemäßen Dachunterspannbahn sind den kennzeichnenden Merkmalen der Unteransprüche entnehmbar.

Die beiden äußeren Vliesschichten des Verbundes sind bevorzugt aus Endlosfilamenten auf Basis von Polyolefinen oder Polyester gefertigt, wobei die der Dachaußenseite zugekehrte dachaußenseitige Vliesschicht ein Flächengewicht von 40 bis 150 g/m², vorzugsweise 50 bis 120 g/m², aufweist und das Flächengewicht der äußeren Vliesschicht stets höher als das Flächengewicht der der Dachinnenseite zugewandten dachinnenseitigen Vliesschicht ist. Die dachinnenseitige Vliesschicht sollte ein Flächengewicht von 17 bis 100 g/m², vorzugsweise 20 bis 80 g/m², aufweisen.

Um eine glattere Oberfläche zu erhalten, wird vorgeschlagen, die dachinnenseitige Vliesschicht aus Endlosfilamenten auf ihrer äußeren Seite zu prägen.

Die Vliesschichten dienen der Verstärkung der Dachunterspannbahn und sind stets wasserdurchlässig und wasserdampfdurchlässig. Die wesentlichen Eigenschaften der Wasserdichtigkeit wird durch die innere Folienschicht erzeugt, wobei diese zugleich wasserdampfdurchlässig in hohem Maße sein muß.

Um einen möglichst guten Verbund aller Schichten zu der Dachunterspannbahn durch Kaschierung unter gleichzeitiger Anwendung von Druck und Wärme zu erzielen, kann es zur Verbesserung der Haftfestigkeit von Vorteil sein, die Vliesschichten aus Endlosfilamenten nicht nur auf Basis von Polypropylen oder Polyethylen oder Polyester allein auszubilden, sondern unter Zusatz eines geringen Gehaltes von Ethylenvinylacetat-Copolymeren herzustellen. Ein Gehalt von 1 bis 10 Gew.-% maximal Ethylenvinylacetat-Copolymer, bezogen auf den Kunststoffanteil der Vliesschicht, wird vorgeschlagen.

In Weiterbildung der erfindungsgemäßen Dachunterspannbahn wird vorgeschlagen, diese flammhemmend auszurüsten, wobei zwischen der inneren Folienschicht und der angrenzenden auf die dachinnenseitige Vliesschicht aufgebrachten Faserschicht aus Ethylenvinylacetat-Copolymeren eine flammhemmende Schutzschicht vorgesehen ist. Als flammhemmende Schutzschicht kann ein Kohlenstoffteilchen enthaltender thermoplastischer Kunststoff oder Hot-Melt-Kleber vorgesehen sein. Als Kleber der Schutzschicht für die Kohlenstoffteilchen kann ebenfalls Ethylenvinylacetat-Copolymeres eingesetzt werden. Auf diese Weise ist eine sehr gute Haftung der flammhemmenden Schutzschicht mit dem Gesamtverbund herstellbar.

Als flammhemmende Schutzschicht kann auch ein Bindemittel auf Basis von wasserlöslichen Harnstoff-Formaldehyd-, Melamin-Formaldehyd-, Phenol-Formaldehyd-Kondensaten oder in Wasser dispergierte Polymerisate bzw. Copolymerisate von Vinylidenchlorid und Vinylchlorid allein oder im Gemisch angewendet sind, enthaltend 5 bis 70 Gew.-%, bezogen auf das Gesamtgewicht des Bindemittels, inerte anorganische Feststoffteilchen mit einem mittleren Partikeldurchmesser von bis zu 100 µm, bevorzugt kleiner 30 µm, wie Calciumkarbonat, Kaolin, Silikate, gemahlene Glasfasern allein oder im Gemisch und/oder ein Flammschutzhilfsmittel aus der Grupe der Antimonoxide, Phosphorester, Zinkborate, Metalloxidhydrate, Metallhydroxide oder Chlorparaffine eingesetzt werden.

Die flammhemmende Schutzschicht wird bevorzugt oberflächlich auf eine der Schichten aufgebracht, und zwar in einer Menge von 30 bis 150 g/m², vorzugsweise 60 bis 120 g/m². Auch die flammhemmende Schicht trägt zur Verbesserung der Stabilität der erfindungsgemäßen Dachunterspannbahn bei.

Die erfindungsgemäße Dachunterspannbahn weist mindestens ein Flächengewicht von 70 g/m² bis etwa 200 g/m² und eine Reißfestigkeit von mindestens 120 N/5 cm, vorzugsweise mindestens 150 N/5 cm auf.

Die hohe Reißfestigkeit wird durch die Kombination der Maßnahmen durch den Einsatz der Mikrofaserschichten aus Ethylenvinylacetat-Copolymeren in Verbindung mit Vliesschichten aus Endlosfilamenten, die gegebenenfalls geprägt sind, insbesondere aus Polypropylen oder Polyester, erreicht. Die innere atmungsaktive Folienschicht darf nicht zu dick sein, da sie dann den Anforderungen an die Wasserdampfdurchlässigkeit nicht mehr genügt, so daß diese innere Folienschicht wenig zur Reißfestigkeit der Dachunterspannbahn beiträgt.

Um die hohe Wasserdampfdurchlässigkeit bei gleichzeitiger hoher Reißfestigkeit und einem dauerhaften Verbund der Dachunterspannbahn zu ermöglichen, ist ein schonendes Herstellverfahren zur Vermeidung der Herabsetzung der Wasserdampfdurchlässigkeit der inneren Folienschicht erforderlich.

Erfindungsgemäß wird ein Verfahren zum Herstellen der erfindungsgemäßen Dachunterspannbahn gemäß Anspruch 13 vorgeschlagen, bei dem die die äußere und innere Vliesschicht bildenden Vliesbahnen auf ihrer der inneren Folienschicht zugewandten Seite mit einer Faserschicht aus Ethylenvinylacetat-Copolymeren durch Aufsprühen ausgerüstet werden und zwischen zwei Vliesbahnen zwischen den einander zugewandten mit EVA-Copolymer-Faserschicht versehenen Oberfläche die atmungsaktive Folie eingeführt und alle Schichten gemeinsam durch einen zwischen zwei umlaufenden Transportbändern gebildeten langgestreckten Spalt hindurchgeführt werden und beim Durchführen durch den Spalte eine Erwärmung der Schichten bis auf Temperaturen im Bereich des Erweichungspunktes der Ethylvinylacetat-Copolymer-Faserschicht von 95°C bis höchstens 110°C erfolgt und unter Einwirkung eines Druckes von 5 bis 30 kN/cm² während mindestens 10 Sekunden die Schichten miteinander zu dem Verbund kaschiert werden, wobei die Porösität und Atmungsaktivität, Wasserdampfdurchlässigkeit und Wasserundurchlässigkeit der inneren Folienschicht erhalten bleibt.

Der erfindungsgemäß eingesetzte Kaschiervorgang, bei dem nach dem Zusammenführen der den Verbund darstellenden Schichten gleichzeitig unter Anwendung von Druck über einen längeren Zeitraum hinweg Wärme zum Durchdringen aller Schichten auf den herzustellenden Verbund ausgeübt wird, ermöglicht, die für den herzustellenden Verbund benötigte Wärme auf einen Temperaturbereich von etwa 95 bis 110°C zu beschränken, so daß ein Anschmelzen der inneren Folienschicht aus Polyethylen oder Polyester vermieden wird und somit deren Wasserdampfdurchlässigkeit erhalten bleibt. Die zum Herstellen des haftfesten Verbundes der miteinander zu verbindenden Schichten der Dachunterspannbahn benötigte Temperatur wird durch die Mikrofaserschicht aus Ethylenvinylacetat-Copolymeren bestimmt, die in diesem Temperaturbereich aufschmilzt und die angrenzenden Schichten miteinander verbindet. Beim Durchlaufen durch den langgestreckten Spalt zwischen zwei umlaufenden Transportbändern und auf Grund des gleichmäßigen Einwirkens von Temperatur und Druck über einen längeren Zeitraum kann ein inniger und vollflächiger Verbund der Schichten miteinander erfolgen. Erfindungsgemäß wird ein Verbund hergestellt, bei dem die innere Folienschicht in bezug auf ihre atmungsaktiven porösen Eigenschaften der Wasserdampfdurchlässigkeit und der Wasserundurchlässigkeit nicht zerstört wird.

Für die Herstellung des Verbundes werden für die äußeren Vliesschichten Vliesbahnen eingesetzt, die bevorzugt bereits in einem separaten Arbeitsgang mit einer Mikrofaserschicht aus Ethylenvinylacetat-Copolymeren durch Aufsprühen versehen sind. Dies kann beispielsweise bei der Herstellung der Vliesbahnen geschehen, wobei am Ende auf die Vliesbahnen aus Endlosfilamenten Mikrofasern aus Ethylenvinylacetat-Copolymeren aufgestreut werden oder aber auch Ethylenvinylacetat-Copolymeres verdüst wird und in feinsten Partikelchen in der gewünschten Menge, bevorzugt einem Flächengewicht von etwa 5 g/m² oder weniger auf die Oberfläche der Vliesbahn aufgebracht werden und durch nachfolgendes Durchführen durch einen Walzenspalt mit der Vliesschicht oberflächlich zwecks Anhaften verpreßt werden.

Sofern die erfindungsgemäße Dachunterspannbahn mit einer flammhemmenden Schutzschicht ausgerüstet werden soll, wird vorgeschlagen, daß auf die Ethylenvinylacetat-Copolymer-Faserschicht der die spätere dachinnenseitige Vliesschicht bildenden Vliesbahn vor dem Einführen in den Spalt ein flammhemmendes Mittel zur Ausbildung einer flammhemmenden Schutzschicht in einer Menge von 20 bis 150 g/m² aufgetragen wird.

Ein bevorzugter Aufbau einer Dachunterspannbahn gemäß der Erfindung umfaßt eine dachaußenseitige Vliesschicht aus Endlosfilamenten aus Polypropylen mit einem Flächengewicht von 90 bis 110 g/m², eine hierauf innenseitig aufgebrachte Mikrofaserschicht aus Ethylenvinylacetat mit einem Flächengewicht von 3-5 g/m², eine innere Folienschicht aus einer porösen atmungsaktiven Polyethylenfolie einer Dicke von 20 bis 30 µm mit einem Volumengehalt von hydrophobiertem Calciumcarbonat einer Teilchengrößer 5 µm von 15 bis 30 Volumen-%, bezogen auf die Gesamtmenge an Polyethylen und Füllstoff, sowie eine dachinnenseitige Vliesschicht aus Endlosfilamenten aus Polypropylen mit einem Flächengewicht von 20 bis 40 g/m², die innenseitig ebenfalls mit einer Mikrofaserschicht aus Ethylenvinylacetat-Copolymeren mit einem Flächengewicht von 3-5 g/m² beschichtet ist.

Die Erfindung wird nachfolgend anhand von Ausführungsbeispielen in der Zeichnung näher erläutert. Es zeigen
- Fig. 1: eine fünfschichtige diffusionsoffene und wasserdichte Dachunterspannbahn im schematischen Aufbau
- Fig. 2: eine flammhemmend ausgerüstete Dachunterspannbahn mit einer flammhemmenden Schutzschicht gemäß Fig.1
- Fig. 3: eine Kaschieranlage zum Herstellen einer Dachunterspannbahn in schematisierter Darstellung.

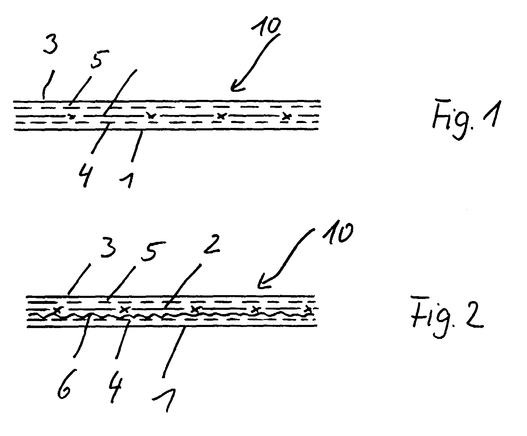

Gemäß Fig. 1 besteht die Dachunterspannbahn 10 aus einem fünfschichtigen Verbund einer dachinnenseitigen Vliesschicht 1 aus Endlosfilamenten, einer dachaußenseitigen Vliesschicht 3 aus Endlosfilamenten und einer inneren mikroporösen Folienschicht 2 und jeweils zwischen der Folienschicht 2 und den Vliesschichten 1, 3 angeordneter Ethylenvinylacetat-Copolymer-Faserschicht 4 bzw. 5.

Als innere und äußere Vliesschichten 1, 3 sind beispielsweise auf Basis von Polypropylen mit einem Flächengewicht von 30 bzw. 100 g/m² aus Endlosfilamente gebildete Spun-Bond-Vlies bzw. Spinnvliese vorgesehen. Diese Vliesschichten 1, 3 können zusätzlich durch Prägen oder Kalandrieren verfestigt sein, so daß die dachinnenseitige Vliesschicht eine Reißfestigkeit von mindestens 20 N/5 cm aufweist und die dachaußenseitige Vliesschicht eine wesentlich höhere Reißfestigkeit von über 150 N/5 cm und eine hohe Abriebfestigkeit aufweist. Die Vliesschichten dienen insbesondere der Erhöhung der Festigkeit der Dachunterspannbahn. Auf Grund der Prägung bzw. Kalandrierung der Vliesschichten kann der Bildung von Wassertropfen infolge Kondenswasser auf der Dachinnenseite vorgebeugt werden, so daß die Wasserdampfdurchlässigkeit der Dachunterspannbahn nicht durch Ansammlungen von Wassertropfen beeinträchtigt werden kann.

Als innere Folienschicht 2 ist beispielsweise ein hydrophobiertes Calciumcarbonat, enthaltend mikroporöse Polyethylenfolie mit einem Flächengewicht von 25 g/m² vorgesehen, die als atmungsaktive mikroporöse Folie von der Firma Exxon Chemical unter der Handelsbezeichnung XBF-100-W hergestellt und verkauft wird.

Der Verbund weist eine Reißfestigkeit von mindestens 120 N/5 cm auf.

Die dachaußenseitige Vliesschicht wird mit einem hohen Flächengewicht eingesetzt, um eine hohe Festigkeit und Reißfestigkeit zu erreichen. Durch Kalandrierung der Vliesschicht wird auch eine hohe Abriebfestigkeit durch eine entsprechend geglättete Oberfläche des Vlieses erreicht.

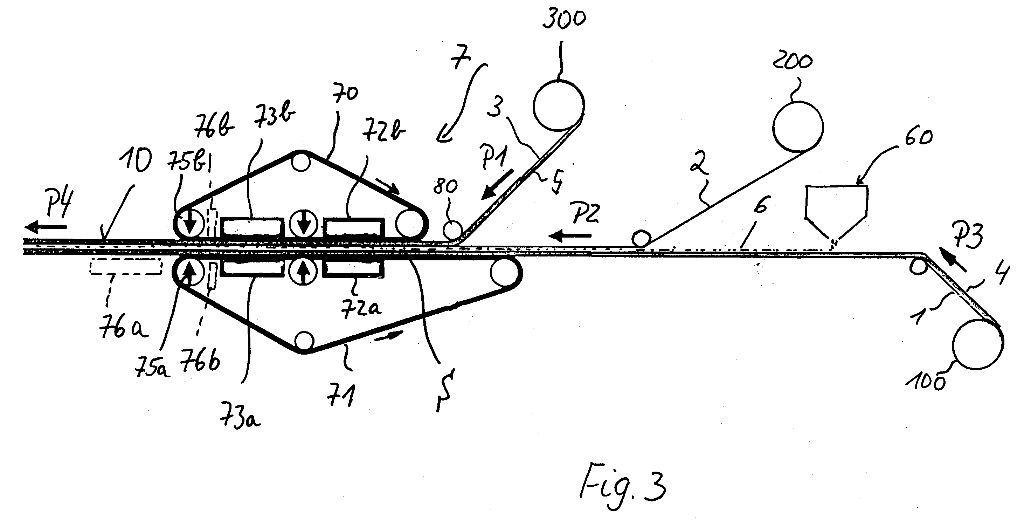

In der Fig. 2 ist ein erfindungsgemäßer Aufbau einer Dachunterspannbahn aus sechs Schichten dargestellt, wobei zwischen der inneren Folienschicht 2 in Richtung auf die dachinnenseitige Vliesschicht 1 zwischen der Faserschicht 4 aus Ethylenvinylacetat-Copolymeren und der inneren Folienschicht 2 eine flammhemmende Schutzschicht 6 angeordnet ist. Die flammhemmende Schutzschicht kann beispielsweise ein Bindemittel oder Kunststoff oder Hot-Melt-Kleber, enthaltend eine geeignete Verbindung aus der Gruppe der Antimonoxide, Phosphorester, Zinkborate, Metalloxidhydrate oder Metallhydroxide, beispielsweise Aluminiumhydroxid, oder Kohlenstoffteilchen vorgesehen werden, wobei die flammhemmende Schutzschicht ein Flächengewicht im Bereich 50 bis 80 g/m² aufweisen sollte. Bei Einsatz einer Schutzschicht mit einem Bindemittel auf Basis Ethylenvinylacetat-Copolymeren sollte mindestens 50 bis 75 Gew.-% beispielsweise Kohlenstoffteilchen, bezogen auf die Gesamtmenge Bindemittel und Kohlenstoffteilchen, in der Schutzschicht enthalten sein.

Die Herstellung des erfindungsgemäßen Verbundes kann beispielsweise mittels einer Kaschieranlage, wie sie in der Fig. 3 schematisch dargestellt ist, erfolgen. Die Kaschieranlage 7 ist als sogenannte Flachbettkaschiervorrichtung ausgebildet und weist ein oberes Transportband 70 und ein unteres Transportband 71 auf, die kontinuierlich über nicht näher bezeichnete Umlenkwalzen mittels eines nicht dargestellten Antriebes angetrieben umlaufen. Zwischen den beiden umlaufenden Transportbändern 70, 71 ist ein langgezogener Spalt S gebildet, in den die miteinander zu dem Verbund der Dachunterspannbahn zu kaschierenden Schichten eingeführt werden und mittels der umlaufenden Transportbänder durch den Spalt hindurchgezogen werden. Die Kaschiervorrichtung 7 ist mit Heizaggregaten 72a, 72b, 73a, 73b ausgerüstet, die auf der Oberseite und Unterseite der umlaufenden Transportbänder 70, 71 angrenzend an dem Spalt S angeordnet sind und auf die zwischen den umlaufenden Transportbändern 70, 71 durch den Spalt hindurchgezogenen miteinander zu verbindenden Schichten einwirken und diese erwärmen. Ausgangsseitig der Kaschiervorrichtung 7 können auch im Inneren auf der Oberseite und/oder Unterseite der Transportbänder 70, 71 im Bereich des Spaltes Kühlaggregate 76a, 76b angeordnet sein, um eine frühe Verfestigung des Verbundes durch Abkühlung zu bewirken. Die Transportbänder 70, 71 sind beispielsweise aus Teflon gefertigt oder mit einer Teflonschicht ausgerüstet, um ein Anhaften der anliegenden Vliesschichten zu vermeiden. Im Bereich des von den Transportbändern 70, 71 gebildeten Spaltes sind auch Walzenpaare 74a, 74b und 75a, 75b vorgesehen, die auf die durch die Kaschiervorrichtung 7 durchgezogenen miteinander zu verbindenden Schichten einen ausreichenden Anpreßdruck zum Kaschieren nach Erwärmung mittels der Heizaggregate ausüben. In Verbindung mit den Heiz- und Kühlaggregaten kann somit der zum Kaschieren erforderliche Druck und die erforderliche Wärme von der Kaschiervorrichtung über die Länge des Spaltes S aufgebracht werden, während die Schichten mittels der umlaufenden Förderbänder 70, 71 durch die Kaschiervorrichtung hindurchgezogen werden.

Der Kaschiervorrichtung 7 wird von einer Rolle 100 eine erste Bahn, die die spätere dachinnenseitige Vliesschicht 1 mit der hierauf aufgebrachten Mikrofaserschicht 4 aus Ethylenvinylacetat-Copolymer umfaßt, in Pfeilrichtung P3 als untere auf dem unteren Transportband 71 aufliegende Bahn zugeführt. Von einer weiteren Rolle 300 wird eine weitere Bahn, die die spätere dachaußenseitige Vliesschicht 3 mit aufgebrachter Mikrofaserschicht 5 aus Ethylenvinylacetat-Copolymer umfaßt, in Pfeilrichtung P1 abgezogen und oberhalb der Schichten 1, 4 der Kaschiereinrichtung 7 zugeführt und über die Umlenkrolle 80 in den Spalt S eingeführt. Die innere Folienschicht 2 wird von einer Rolle 200 in Pfeilrichtung P2 abgezogen und zwischen den beiden äußeren Bahnen 1, 4 bzw. 3, 5 eingeführt und mit diesen zusammen in den Spalt S der Kaschiervorrichtung weitergeführt. Die von den Rollen 100 bzw. 300 abgezogenen Bahnen sind Verbundbahnen aus jeweils einem Vlies aus Endlosfilamenten mit einseitiger aufgebrachter Faserschicht aus EVA-Copolymeren. Sofern noch eine flammhemmende Ausrüstung bzw. Schutzschicht 6 für die herzustellende Dachunterspannbahn gewünscht wird, siehe Fig. 2, kann beispielsweise aus einer entsprechenden Vorrichtung 60 das Material der flammhemmenden Schutzschicht ausgetragen und auf die Oberfläche der Mikrofaserschicht 4 der dachinnenseitigen Vliesschicht 1, hier der unteren Bahn, aufgebracht werden. Alle Schichten werden in dem Spalt S der Kaschieranlage 7 zusammengeführt und mittels der Heizaggregate 72a, b, 73a, b mit Wärme beaufschlagt, so daß eine Erwärmung der Schichten auf eine Temperatur zwischen etwa 95 bis 110°C, bevorzugt um etwa 100°C, erfolgt. Gleichzeitig wird beim Durchlaufen durch die Kaschiervorrichtung 7 mittels der Transportbänder 70, 71 sowie der Walzenpaare 73a, 73b, 75a, 75b und gegebenenfalls auch der Heizaggregate ein Druck auf die Schichten ausgeübt, so daß unter der Einwirkung der Wärme und des Druckes die Schichten durch Kaschierung miteinander haftfest verbunden werden. Der Verbund verläßt als die gewünschte Dachunterspannbahn 10 die Kaschiervorrichtung in Pfeilrichtung P4.

Die Herstellung des haftfesten Verbundes der erfindungsgemäßen Dachunterspannbahn ist durch die gewählte Technik besonders schonend und vermeidet insbesondere eine Zerstörung der Eigenschaften der atmungsaktiven inneren Folienschicht 2 durch die Herstellung des haftfesten Verbundes. Eine hochwertige wasserdichte und wasserdampfdurchlässige sowie strapazierfähige und reißfeste Dachunterspannbahn kann somit erfindungsgemäß hergestellt werden.

Durch zusätzliche Aufbringung einer Schutzschicht 6 aus einem Bindemittel oder thermoplastischen Kunststoff, enthaltend geeignete inerte Materialien, können auch die Anforderungen der flammhemmenden Ausrüstung gemäß DIN 4102 B1 für die Dachunterspannbahn erfüllt werden.

## Patentansprüche

1. Diffusionsoffene und wasserdichte Dachunterspannbahn aus einem mindestens dreilagigen Verbund, enthaltend zwei äußere Vliesschichten auf Basis von thermoplastischen Kunststoffen und eine innere wasserdampfdurchlässige und wasserundurchlässige Schicht aus einer porösen atmungsaktiven Folie auf Basis thermoplastischer Kunststoffe, wobei die Folie inerte anorganische Feststoffteilchen mit einem mittleren Durchmesser kleiner 10 µm als Füllstoff in einer Menge von mindestens 10 Volumen-%, bezogen auf das Gesamtvolumen, an thermoplastischem Kunststoff und Füllstoff enthält,
**dadurch gekennzeichnet**, daß zwischen jeder der äußeren Vliesschichten (1, 3) und der Folienschicht (2) eine Faserschicht (4, 5) aus Microfasern aus Ethylen-Vinylacetat-Copolymer von 2 bis 7 g/m² Flächengewicht vorgesehen ist und der Verbund durch Kaschieren hergestellt ist.

2. Dachunterspannbahn nach Anspruch 1,
**dadurch gekennzeichnet**, daß die beiden äußeren Vliesschichten (1, 3) des Verbundes aus Endlosfilamenten auf Basis von Polyolefinen oder Polyester gefertigt sind, wobei die der Dachaußenseite zugekehrte äußere Vliesschicht (3) ein Flächengewicht von 40 bis 150 g/m², vorzugsweise 50 bis 120 g/m², aufweist und das Flächengewicht der äußeren Vliesschicht (3) stets höher als das Flächengewicht der der Dachinnenseite zugewandten dachinnenseitigen Vliesschicht (1) ist.

3. Dachunterspannbahn nach Anspruch 1 oder 2,
**dadurch gekennzeichnet**, daß die innere atmungsaktive Folie (2) auf Basis von Polyethylen oder Polyester als thermoplastischem Kunststoff hergestellt ist und eine Dicke von 20 bis 40 µm aufweist.

4. Dachunterspannbahn nach einem der Ansprüche 1 bis 3,
**dadurch gekennzeichnet**, daß die dachinnenseitige Vliesschicht aus Endlosfilamenten auf ihrer im Verbund außenliegenden Seite geprägt ist.

5. Dachunterspannbahn nach einem der Ansprüche 1 bis 4,
**dadurch gekennzeichnet**, daß eine oder beide äußere Vliesschichten aus Endlosfilamenten auf der Basis von Polypropylen und Ethylenvinylacetat-Copolymeren ausgebildet sind, wobei 90 bis 99 Gew.-% Polypropylen und 1 bis 10 Gewichts-% Ethylenvinylacetat-Copolymere vorgesehen sind.

6. Dachunterspannbahn nach einem der Ansprüche 1 bis 5,
**dadurch gekennzeichnet**, daß zwischen der inneren Folienschicht (2) und der angrenzenden auf die dachinnenseitige Vliesschicht (1) aufgebrachten Faserschicht (4) aus Ethylenvinylacetat-Copolymeren eine flammenhemmende Schutzschicht (6) vorgesehen ist.

7. Dachunterspannbahn nach Anspruch 6,
**dadurch gekennzeichnet**, daß als flammhemmende Schutzschicht (6) ein Kohlenstoffteilchen enthaltender thermoplastischer Kunststoff oder Hot-Melt-Kleber vorgesehen ist.

8. Dachunterspannbahn nach Anspruch 7,
**dadurch gekennzeichnet**, daß die Schutzschicht (6) als Kleber für die Kohlenstoffteilchen Ethylenvinylacetat-Copolymere enthält.

9. Dachunterspannbahn nach Anspruch 6,
**dadurch gekennzeichnet**, daß als flammhemmende Schutzschicht (6) ein Bindemittel auf Basis von wasserlöslichen Harnstoff-Formaldehyd-, Melamin-Formaldehyd-, Phenol-Formaldehyd-Kondensaten oder in Wasser dispergierte Polymerisate bzw. Copolymerisate von Vinylidenchlorid und Vinylchlorid allein oder im Gemisch angewendet sind, enthaltend 5 bis 70 Gew.-%, bezogen auf das Gesamtgewicht des Bindemittels, inerte anorganische Feststoffteilchen mit einem mittleren Partikeldurchmesser von bis zu 100 µm, bevorzugt kleiner 30 µm, wie Calciumkarbonat, Kaolin, Silikate, gemahlene Glasfasern allein oder im Gemisch und/oder ein Flammschutzhilfsmittel aus der Grupe der Antimonoxide, Phosphorester, Zinkborate, Metalloxidhydrate, Metallhydroxide oder Chlorparaffine vorgesehen ist.

10. Dachunterspannbahn nach einem der Ansprüche 6 bis 9,
**dadurch gekennzeichnet**, daß die Schutzschicht (6) ein Flächengewicht von 20 bis 150 g/m², vorzugsweise 50 bis 120 g/m² aufweist.

11. Dachunterspannbahn nach einem der Ansprüche 1 bis 10,
**dadurch gekennzeichnet**, daß die innere Folienschicht (2) mittels Hydrophiermitteln auf Basis von Fluorkohlenstoffen, wie Block-Copolymere eines Perfluoralkylacrylats oder Fluorkohlenstoffen, die Trifluormethylsililgruppen an Stelle der Perfluoralkylgruppen enthalten, hydrophob ausgerüstet ist.

12. Dachunterspannbahn nach einem der Ansprüche 1 bis 11,
**dadurch gekennzeichnet**, daß der Verbund ein Flächengewicht von 70 bis 200 g/m² und eine Reißfestigkeit von mindestens 120 N/5 cm, vorzugsweise mindestens 150 N/5 cm, aufweist.

13. Verfahren zum Herstellen einer diffusionsoffenen Dachunterspannbahn aus einem mindestens dreilagigen Verbund gemäß einem der Ansprüche 1 bis 12, enthaltend zwei äußere Vliesschichten auf Basis von thermoplastischen Kunststoffen und eine innere wasserdampfdurchlässige und wasserundurchlässige Schicht aus einer porösen atmungsaktiven Folie auf Basis thermoplastischer Kunststoffe, **dadurch gekennzeichnet**, daß die die äußere und innere Vliesschicht bildenden Vliesbahnen auf ihrer der inneren Folienschicht zugewandten Seite mit einer Faserschicht aus Ethylenvinylacetat-Copolymeren durch Aufsprühen ausgerüstet werden und zwischen zwei Vliesbahnen miteinander zugewandten mit EVA-Copolymer-Faserschicht versehener Oberfläche die atmungsaktive Folie eingeführt und alle Schichten gemeinsam durch einen zwischen zwei umlaufenden Transportbändern gebildeten langgestreckten Spalt hindurchgeführt werden und beim Durchführen durch den Spalte eine Erwärmung der Schichten bis auf Temperaturen im Bereich des Erweichungspunktes der Ethylvinylacetat-Copolymer-Faserschicht von 95°C bis höchstens 110°C erfolgt und unter Einwirkung eines Druckes von 5 bis 30 kN/cm² während mindestens 10 Sekunden die Schichten miteinander zu dem Verbund kaschiert werden, wobei die Porösität und Atmungsaktivität, Wasserdampfdurchlässigkeit und Wasserundurchlässigkeit der inneren Folienschicht erhalten bleibt.

14. Verfahren nach Anspruch 13,
**dadurch gekennzeichnet**, daß auf die Ethylenvinylacetat-Copolymer-Faserschicht der die spätere dachinnenseitige Vliesschicht bildenden Vliesbahn vor dem Einführen in den Spalt ein flammhemmendes Mittel zur Ausbildung einer flammhemmenden Schutzschicht in einer Menge von 20 bis 150 g/m² aufgetragen wird.
